# EUROPÄISCHE PATENTANMELDUNG

(11) **EP 1 900 968 A2**
(43) Veröffentlichungstag der Anmeldung: **19.03.2008**
(21) Anmeldenummer: 07015178.2
(22) Anmeldetag: 02.08.2007
(51) Int. Cl.: F16G 13/18

(54) **Erwärmungsanlage, insbesondere Induktionserwärmungsanlage**

(30) Priorität: 14.09.2006 DE 102006044038; 09.03.2007 DE 102007011974
(71) Anmelder: ITG Induktionsanlagen GmbH, 69434 Hirschhorn/Neckar (DE)
(72) Erfinder: Wagner, Bernd, 69429 Waldbrunn (DE); Kessel, Heinz, 96472 Rödental (DE)
(74) Vertreter: Ullrich & Naumann

(57) **Zusammenfassung**

Eine Erwärmungsanlage, insbesondere eine Induktionserwärmungsanlage, zum Erwärmen von Werkstücken, ist im Hinblick auf einen möglichst effektiven und flexiblen Transport von Werkstücken durch die Erwärmungsanlage dadurch gekennzeichnet, dass eine Transportkette (1) vorgesehen ist, mittels der das zu erwärmende Werkstück (8) durch die Erwärmungsanlage transportierbar ist, und dass die Transportkette (1) aus einem keramischen Werkstoff hergestellt ist.

## Beschreibung

**Die Erfindung betrifft eine Erwärmungsanlage, insbesondere eine Induktionserwärmungsanlage, zum Erwärmen von Werkstücken.**

Herkömmliche Erwärmungsanlagen der hier in Rede stehenden Art werden als Durchstoß-Öfen betrieben. Bei dieser Art von Öfen wird der Transport von Werkstücken durch den Ofen mit einem Einstoßer vorgenommen. Der Einstoßer drückt jeweils ein Werkstück, welches von einer Vereinzelung vorgelegt wird, in den Ofen. Dabei liegen die Werkstücke auf einer wassergekühlten Tragschiene, welche horizontal durch den Ofen läuft. Durch Einschieben weiterer Werkstücke im gewünschten Takt werden die bereits im Ofen befindlichen Werkstücke weiter transportiert und der Ofen wird stetig gefüllt. Am Ende des Ofens wird ein erwärmtes Werkstück durch ein auf der kalten Seite eingeschobenes Werkstück ausgefördert. Durch die Länge des Ofens und den Takt kann die Zeit, in der sich ein Werkstück im Ofen befindet, relativ genau festgelegt werden.

Beim Abschalten eines Durchstoß-Ofens muss der Ofen leergefahren werden, um ein Abkühlen und Verbleiben der Werkstücke im Ofen zu vermeiden. Da jedoch zum Ausfördern eines Werkstücks ein neues Werkstück eingeschoben werden muss, müssen Phantomstücke in die Zuförderung des Ofens eingelegt werden. Phantomstücke setzen allerdings voraus, dass ein Anlagenbediener diese Teile einlegt. Dies führt zu einem zusätzlichen Bedienaufwand. Alternativ ist der Einstoßer mit einer Vorschubeinheit versehen und kann so die Teile im Takt ausfördern. Hierbei wird jedoch zusätzlich zu dem Platz für den Erwärmungsofen Platz für die Ausfördereinheit benötigt. Dies bedeutet, dass die Anlage zumindest die doppelte Länge erreicht. Beides ist aus betriebtechnischen meist unerwünscht oder zumindest hinderlich.

Nachteilig bei derartigen Öfen ist ferner, dass bedingt durch die Vereinzelung der Teile und den notwendigen Rückhub des Einstoßers sehr schnell eine Mindesttakt**zeit erreicht ist, die nicht unterschritten werden kann. Außerdem können flache und** relativ leichte Werkstücke nicht mit einem Durchstoß-Ofen erwärmt werden. Hier besteht die Gefahr, dass sich ein Werkstück unter oder über ein anderes Werkstück schiebt und sich die Werkstücke im Ofen verkeilen. Die Förderung der Werkstücke versagt damit und die Werkstücke müssen einzeln manuell entnommen werden. Häufig muss dann zusätzlich der Ofen abgeschaltet werden.

Aus der Praxis sind daher Transportketten aus temperaturbeständigem Stahl zur Förderung von Werkstücken durch eine Erwärmungsanlage bekannt. Hierbei läuft eine Endloskette durch den Ofen, auf der sich die zu erwärmenden Werkstücke **befinden. Derartige Ketten können lediglich bei einer Beheizung mit Gas oder Öl** oder einer Widerstandsbeheizung genutzt werden. In Induktionserwärmungsanlagen sind die bekannten Transportketten nicht einsetzbar. Bei Induktionsöfen erzeugen Spulen oder Induktoren starke magnetische Wechselfelder, die in leitfähigen Materialien Wirbelströme induzieren. Infolge des ohmschen Widerstands werden diese Ströme in Wärme umgesetzt. Dieser Effekt tritt jedoch nicht nur bestimmungsgemäß in den im Ofen befindlichen Werkstücken auf, vielmehr wird auch eine Transportkette in hohem Maße erwärmt. Dadurch kann die Kette eine höhere Temperatur erreichen als die Werkstücke selbst. Durch Verwendung geeigneter Stähle können die Kettenglieder zwar den hohen Temperaturen standhalten, allerdings bleibt ein weiteres Problem bestehen: Wirbelströme bilden sich im Allgemeinen nicht ausschließlich in den Kettengliedern aus. Es treten vielmehr auch Stromflüsse zwischen den Kettengliedern und zu anderen Anlagenteilen, beispielsweise einem Kettenrad, auf, die beispielsweise über die Verbinder zwischen den Kettengliedern fließen. Bei sehr hohen Stromdichten können auch zwischen benachbarten Teilen Lichtbögen entstehen. Dies führt zu einer Verschweißung der Kettenglieder und lässt die Kette binnen weniger Minuten nicht mehr verwendungsfähig werden.

**Ein weiteres Problem - auch bei nicht induktiv geheizten Öfen - ist, dass durch eine** Kette vergleichsweise viel Wärme aus dem Ofen ausgetragen wird. Im Normalfall läuft die Kette innerhalb des Heizbereiches des Ofens von der kalten zu der heißen Seite des Ofens, während sie außerhalb des Ofens in die andere Richtung läuft. Innerhalb des Heizbereichs des Ofens wird die Kette erheblich erwärmt und gibt die aufgenommene Wärme außerhalb des Ofens an die Umgebung ab. Dadurch entsteht ein hoher Wärmeverlust des Ofens.

Der vorliegenden Erfindung liegt daher die Aufgabe zugrunde, eine Erwärmungsanlage der eingangs genannten Art derart auszugestalten und weiterzubilden, dass ein möglichst effektiver und flexibler Transport von Werkstücken durch die Erwärmungsanlage erreichbar ist.

Erfindungsgemäß wird die voranstehende Aufgabe durch die Merkmale des Patentanspruches 1 gelöst. Danach ist die in Rede stehende Erwärmungsanlage dadurch gekennzeichnet, dass eine Transportkette vorgesehen ist, mittels der das zu erwärmende Werkstück durch die Erwärmungsanlage transportierbar ist, und dass die Transportkette aus einem keramischen Werkstoff hergestellt ist.

In erfindungsgemäßer Weise ist zunächst erkannt worden, dass auch bei induktiver Erwärmung auf die Vorzüge einer Transportkette nicht verzichtet werden muss. Eine Transportkette kann vielmehr dennoch eingesetzt werden, wenn ein Verschweißen der Kettenglieder untereinander verhindert werden kann. Dazu muss der Stromfluss zwischen den Kettengliedern wirkungsvoll unterbunden werden. Dies könnte durch Isolierstücke zwischen den Kettenelementen erreicht werden. Diese Isolierstücke könnten beispielsweise aus Keramik bestehen. Noch bessere Ergebnisse lassen sich jedoch erzielen, wenn das Entstehen der Wirbelströme in der Transportkette vollständig unterbleibt. Zu diesem Zweck wird erfindungsgemäß eine Transportkette für den Transport der Werkstücke durch die Erwärmungsanlage verwendet, die aus einem keramischen Werkstoff hergestellt ist. Da Keramiken im Allgemeinen Nichtleiter sind, entstehen keine Wirbelströme in der Kette. Lediglich dielektrische Verluste können auftreten, die jedoch zu vergleichsweise geringen Erwärmungen führen.

Durch die Verwendung einer keramischen Kette in einer Induktionserwärmungsanlage ist kein Einstoßer mehr notwendig. Dadurch wird das Auflegen der Teile einfach und schnell durchführbar. Die Werkstücke können durch eine Zuförderung im Endlosverfahren auf die Kette aufgelegt werden. Es lassen sich dadurch auch Werkstücke induktiv erwärmen, die bislang durch ihre Geometrie, beispielsweise bei **konischen Zylindern oder flachen Teilen, mit Hilfe der herkömmlichen Transportmöglichkeiten nicht durch einen Ofen gefahren werden konnten. Ein Hochstellen** von Teilen innerhalb des Ofens durch den Säulendruck wird vermieden und es können auch Werkstücke mit kleinen Durchmessern und kurzer Längen gefahren werden.

Die Durchlaufgeschwindigkeit der Werkstücke durch den Ofen ist nur noch von der gewünschten Temperatur und der maximal möglichen oder gewünschten Ofenlänge begrenzt. Eine Begrenzung durch die mechanische Bewegung eines Einstoßers ist nicht mehr gegeben. Das Leerfahren der Anlage erfolgt in denkbar einfacher Weise dadurch, dass keine weiteren Teile mehr auf die Kette aufgelegt werden. Dadurch ist das Abschalten der Erwärmungsanlage erheblich vereinfacht. Es werden keine Phantomstücke oder Ausstoßer mehr benötigt.

Zusätzlich zu der Verwendung einer keramischen Kette in Induktionserwärmungsanlagen lässt sich die keramische Kette auch vorteilhaft in anderen Erwärmungsanlagen einsetzen, die beispielsweise mit Öl oder einer Widerstandsbeheizung beheizt werden. Da Keramik über eine relativ schlechte Wärmeleitung verfügt, nimmt die Kette einerseits lediglich eine vergleichsweise geringe Wärmemenge von den transportierten Werkstücken und aus dem Heizbereich der Anlage auf. Dies geschieht zudem relativ langsam. Andererseits gibt die Kette die Wärme außerhalb des Heizbereichs nur langsam und in geringem Maße wieder an die Umgebung ab. Dadurch verbessert sich die Energiebilanz der Erwärmungsanlage erheblich. In Testanlagen hat sich gezeigt, dass eine keramische Kette selbst bei einer Erwärmung von Werkstücken auf 1100°C im Mittel eine Temperatur von 700°C nicht überschreitet.

Da in einer Erwärmungsanlage vergleichsweise hohe Temperaturdifferenzen zwischen der Erwärmungszone und dem Bereich, in dem die Kette zur kalten Seite des Ofens zurückbewegt wird, bestehen, können nicht alle Arten von keramischen Werkstoffen verwendet werden. Viele Keramiken sind temperaturschockempfindlich und bilden in Folge starker Temperaturänderungen und den daraus resultierenden inneren mechanischen Spannungen Risse aus. Dadurch würde die Kette innerhalb kürzester Zeit nicht mehr benutzbar sein. Allerdings sind aus der Praxis auch Keramiken bekannt, die wenig temperaturschockunempfindlich sind und die im Zusammenhang mit Erwärmungsanlagen auftretenden Temperaturschwankungen zu keiner Zerstörung des Bauteils führt. Beispielhaft sei hier Aluminiumtitanat genannt.

Vorzugsweise sind die einzelnen Kettenglieder der Transportkette aus einer Sinterkeramik hergestellt. Dabei werden die einzelnen Glieder aus einer Rohmasse geformt und danach in einem Sinterprozess zu einer Keramik gebrannt. Durch die Verwendung von Sinterkeramik kann die Form der einzelnen Glieder vergleichsweise frei modelliert werden. Erst durch den Sintervorgang erhalten die Kettenglieder ihre endgültige Festigkeit und verschleißen praktisch nicht.

Hinsichtlich eines möglichst optimalen Einsatzes bei Induktionserwärmungsanlagen könnten nicht nur die Kettenglieder der Transportkette sondern auch die Verbinder, mit denen die Kettenglieder untereinander verbunden sind, aus Keramik bestehen. Auch diese sind dann vorzugsweise aus einer Sinterkeramik gefertigt. Soll die keramische Kette im Zusammenhang mit gas-, öl- oder widerstandsbeheizten Öfen Verwendung finden, könnten auch Verbinder aus einem Spezialstahl Verwendung finden. Hier müsste jedoch der gegenüber den keramischen Kettengliedern wesentlich erhöhten Wärmeausdehnung geeignet Rechnung getragen werden.

Hinsichtlich eines möglichst sicheren und stabilen Transports eines Werksstücks auf der Transportkette könnten die Glieder der Transportkette an das zu transportierende Werkstück angepasst sein. Bei flachen Werkstücken oder Werkstücken mit einer flachen Seite könnte die Kette eine Fläche ausbilden. Diese Fläche könnte je nach gewähltem Aufbau der Kette mehr oder weniger geschlossen sein. Bei beispielsweise kugelförmigen oder anderen Werkstücken, die zum Rollen neigen, könnten alle oder lediglich einzelne Kettenglieder über geeignete Vertiefungen oder Aufnahmen verfügen, in die die Werkstücke eingelegt werden können. Diese können beispielsweise rinnen- oder wannenförmig längs oder quer zu der Kette verlaufen. Allerdings sind auch andere Ausformungen von Vertiefungen oder Aufnahmen denkbar. Sind die Kettenglieder aus Sinterkeramik hergestellt, lassen sich die betreffenden Glieder der Transportkette beim Herstellungsprozess sehr gut und vergleichsweise einfach auf die zu transportierenden Werkstücke anpassen. Die Kettenglieder könnten allerdings auch derart ausgeformt sein, dass die Kette zum Transport einer Reihe verschieden ausgebildeter Werkstücke geeignet ist.

Auch die Länge der einzelnen Kettenglieder könnte je nach Anwendungszweck verändert werden. Als praktisch sinnvoll haben sich in Versuchen Längen zwischen 100 mm und 350 mm erwiesen. Allerdings können in einigen Fällen auch Längen außerhalb dieses Bereichs sinnvoll sein. Üblicherweise neigen Ketten mit sehr kurzen Gliedern jedoch stark zum Durchhängen, so dass meist das Unterschreiten einer minimalen Länge nicht sinnvoll ist.

Die Breite der Kettenglieder oder der eingesetzten Kette wird im Allgemeinen von den zu transportierenden Werkstücken abhängen. Für kleine oder schmale Teile ist meist eine schmale Kette ausreichend, während breite Teile durch eine breitere Kette gestützt werden müssen. Die Dimensionierung der Breite wird wiederum von der Anwendungssituation abhängen.

Zum Vermeiden oder Reduzieren eines Durchhängens der Transportkette könnte diese geeignet abgestützt sein. Dies könnte insbesondere im Heizbereich der Erwärmungsanlage von Interesse sein. Zudem ließen sich durch eine Abstützung die Längskräfte, mit der die Kette belastet wird, reduzieren. Eine Abstützung könnte auf verschiedene Art und Weise gebildet sein. Lediglich beispielhaft sei auf den Einsatz einer oder mehrer Walzen oder einer oder mehrerer Trageschienen verwiesen. Die abstützenden Elemente könnten dabei wiederum aus Keramik hergestellt sein. Dadurch können die abstützenden Elemente zum einen vorteilhaft in Induktionserwärmungsanlagen eingesetzt werden. Andererseits verfügt Keramik über eine harte und glatte Oberfläche, so dass zum einen die Reibungsverluste vergleichsweise gering sind und zum anderen die Vorteile der Verschleißfestigkeit besonders gut genutzt werden.

Die Transportkette könnte durch ein Kettenrad angetrieben sein. Das Kettenrad wird dabei auf die gewählte Ausgestaltung der Transportkette angepasst sein. Alternativ könnte auch die Kette bzw. die Formgebung der Kettenglieder auf das verwendete Kettenrad angepasst sein. Es ist allerdings auch denkbar, dass die Transportkette und das Kettenrad wechselseitig aufeinander angepasst werden. Vorzugsweise ist das Kettenrad dabei außerhalb der Erwärmungszone der Erwärmungsanlage angeordnet.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in Schrägansicht einen Ausschnitt einer Transportkette aus Vollkeramik, die erfindungsgemäß in einer Erwärmungsanlage einsetzbar ist,

- Fig. 2: eine Seitenansicht eines bei der Transportkette gemäß Fig. 1 verwendeten Verbinders und
- Fig. 3: eine Seitenansicht und eine Aufsicht der Transportkette gemäß Fig. 1.

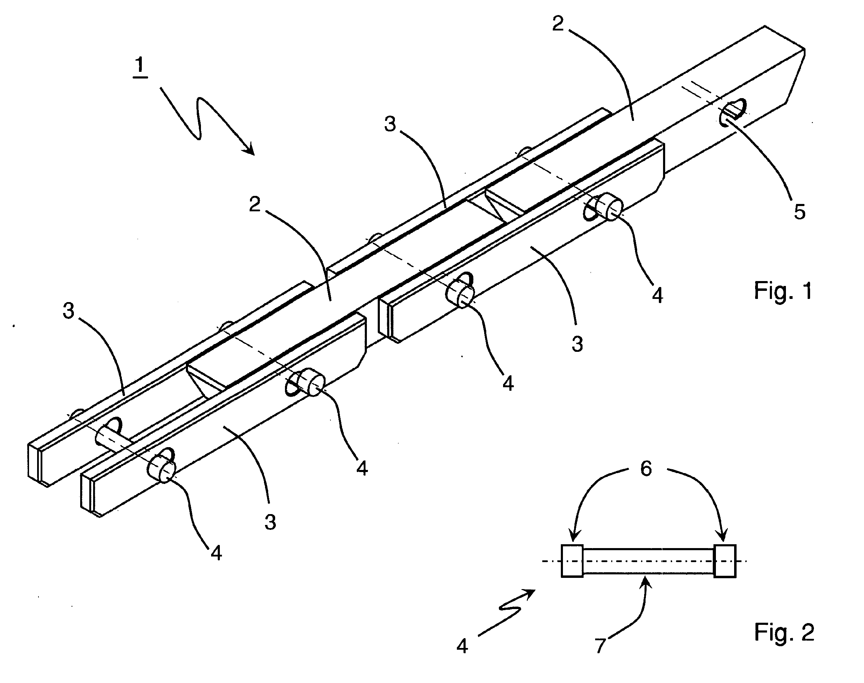

Fig. 1 zeigt eine Schrägansicht eines Ausschnitts einer Transportkette, die erfindungsgemäß zum Transport von zu erwärmenden Werkstücken in einer Erwärmungsanlage einsetzbar ist. Eine derartig aufgebaute Transportkette könnte durch den Heizbereich einer Erwärmungsanlage laufen und Werkstücke in den Heizbereich fördern. Die Transportkette 1 ist vollständig aus Keramik gefertigt und umfasst zentrale Blöcke 2, die in Längsrichtung eine Reihe bilden und die im Abstand zueinander angeordnet sind. An den Längsseiten der Blöcke 2 ist links und rechts jeweils eine Lasche 3 angeordnet, die in der dargestellten Ausführungsform im Wesentlichen die gleiche Länge aufweist wie die Blöcke 2. Die Laschen 3 links und rechts der Blöcke 2 bilden jeweils in Längsrichtung eine Reihe und sind gegenüber der Reihe von Blöcken 2 derart versetzt, dass eine Lasche 3 in ihren äußeren Bereichen den äußeren Bereich zweier benachbarter Blöcke 2 berührt. Die sich derart berührenden Laschen 3 und Blöcke 2 sind über Verbinder 4 untereinander verbunden. Dadurch entsteht eine Reihe von Blöcken 2, die mittels Laschen 3 und Verbindern 4 untereinander verbunden sind und gleichzeitig eine Bewegung in einer Richtung erlauben.

Jeder Block 2 und jede Lasche 3 besitzt in den in Längsrichtung außen liegenden Bereichen jeweils eine Durchführung, die jeweils durch zwei sich überscheidende zylindrische Löcher gebildet ist. Dabei sind die Mittelachsen der einzelnen Löcher im Wesentlichen senkrecht zur Längsrichtung eines Blockes 2 bzw. einer Lasche 3 und im Wesentlichen parallel zueinander und in einer Ebene angeordnet. Die in Längsrichtung außen liegenden Löcher weisen einen geringfügig kleineren Durchmesser auf als die in Längsrichtung weiter innen liegenden Löcher.

Die Verbinder 4, die zum Zusammenfügen der Blöcke 2 und der Laschen 3 verwendet werden und die Fig. 2 detaillierter darstellt, sind durch zylindrische Elemente gebildet, die an den äußeren Enden 7 über einen geringfügig größeren Durchmesser als im Mittelteil 6 verfügen. Dabei ist der Mittelteil 6 derart dimensioniert, dass dessen Länge im Wesentlichen der Breite der Blöcke 2 plus der Breite zweier Laschen 3 plus ein gewisses Toleranzmaß entspricht, damit ein Block 2 und zwei Laschen 3 zwischen den beiden Enden 7 aufgenommen werden können. In radialer Richtung sind die Verbinder 4 und die Blöcke 3 bzw. Laschen 4 derart dimensioniert, dass die Verbinder 4 durch den mit einem größeren Durchmesser versehenen Teil der Durchführung 5 geführt werden können und - in die Durchführung eingeführt und in den anderen Teil der Durchführung 5 mit dem kleineren Durchmesser verschoben - nicht mehr längs aus der Durchführung 5 gezogen werden können. Diese Ausgestaltung der Durchführungen 5 und Verbinder 4 gewährleistet, dass die Kette 1 problemlos zusammengefügt werden kann, ohne dass eine kraftschlüssige Verbindung zwischen den Verbindern 4 und den Laschen 3 bzw. Blöcken 2 notwendig ist. Die in der Praxis bei Ketten häufig eingesetzte kraftschlüssige Verbindung wäre bei einer Kette aus Keramik mit sehr großen Problemen verbunden. Gleichzeitig hat die Ausgestaltung der Kette den Vorteil, dass sich die Verbinder 4 in den Durchführungen 5 arretieren, wenn die Kette 1 in Längsrichtung belastet wird. Dies kann sehr einfach erreicht werden, indem die Kette geringfügig gespannt wird. Ist die Kette hingegen entspannt, können die Kettenglieder 2, 3 und Verbinder 4, beispielsweise für Wartungsarbeiten, sehr leicht gelöst werden.

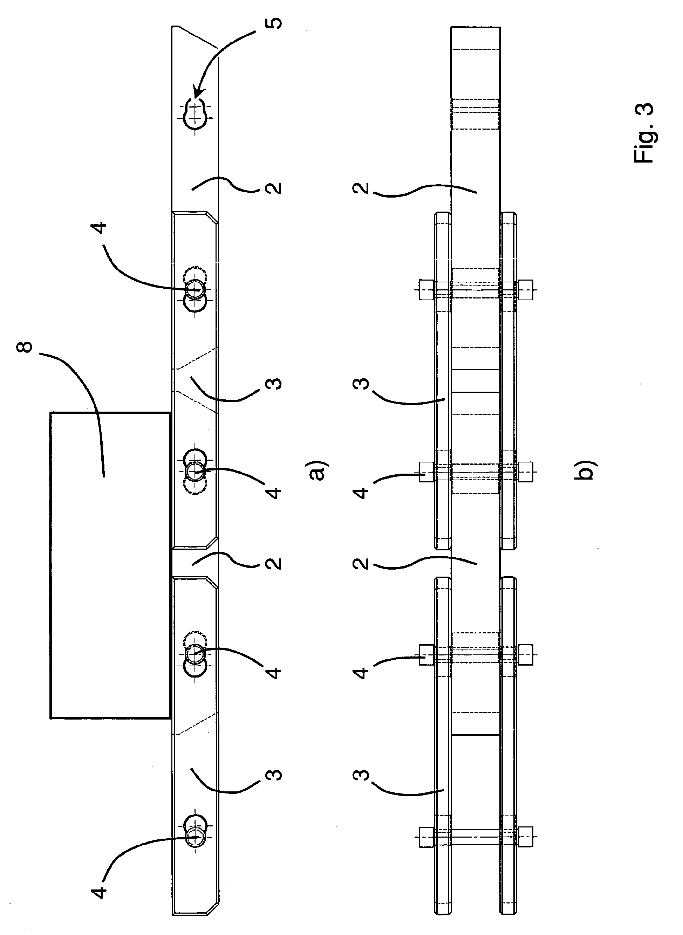

Fig. 3 zeigt den Ausschnitt der Kette gemäß Fig. 1 in einer Seitenansicht (Fig. 3a) **bzw. einer Aufsicht (Fig. 3b). Dabei sind einige Details des Aufbaus der exemplarischen Kette noch deutlicher zu erkennen. Zusätzlich ist in Fig. 3a exemplarisch ein** Werkstück 8 dargestellt, das auf der Transportkette 1 liegt.

Der in Fig. 1 und in Fig. 3 dargestellte Ausschnitt der keramischen Kette 1 aus zwei Laschenpaaren 3 und zwei Blöcken 2 kann beliebig fortgesetzt werden. Auf diese Weise lässt sich eine beliebig lange Kette mit einer relativ beliebigen Anzahl von Blöcken 2 und Laschenpaaren bilden, die auch als Endloskette ausgeführt sein kann. Zusätzlich lässt sich die Kette in Querrichtung dadurch verbreitern, dass die Anordnung entsprechend in Querrichtung wiederholt angeordnet wird. Zusätzlich oder alternativ können die Blöcke 2 breiter ausgestaltet sein. In den Figuren sind die Blöcke 2 plan und schmal ausgeführt. Die Blöcke 2 können jedoch auch breiter ausgebildet sein und dadurch eine größere Auflagefläche für die Werkstücke bieten. Gleichzeitig könnten die Blöcke im oberen Bereich Vertiefungen aufweisen, die zur Aufnahme der zu transportierenden Werkstücke ausgebildet sind. Zudem kann beispielsweise die Unterseite der Blöcke 2 über Vertiefungen verfügen, die auf das für das Antreiben der Kette genutzte Kettenrad (nicht eingezeichnet) aufnehmen kann.

Abschließend sei ganz besonders hervorgehoben, dass die zuvor aufgezeigte Transportkette lediglich der Erörterung der erfindungsgemäßen Lehre dient, die Lehre der Erfindung jedoch nicht auf die dargestellte Ausgestaltung beschränkt.

### Bezugszeichenliste

- 1: Transportkette
- 2: zentraler Block
- 3: Lasche
- 4: Verbinder
- 5: Durchführung
- 6: äußeres Ende des Verbinders
- 7: Mittelteil
- 8: Werkstück

## Patentansprüche

1. Erwärmungsanlage, insbesondere Induktionserwärmungsanlage, zum Erwärmen von Werkstücken,
**dadurch gekennzeichnet, dass** eine Transportkette (1) vorgesehen ist, mittels der das zu erwärmende Werkstück (8) durch die Erwärmungsanlage transportierbar ist, und dass die Transportkette (1) aus einem keramischen Werkstoff hergestellt ist.

2. Erwärmungsanlage nach Anspruche 1, **dadurch gekennzeichnet, dass** die Kettenglieder (2, 3) der Transportkette aus Sinterkeramik hergestellt sind.

3. Erwärmungsanlage nach Anspruch 1 oder 2, **dadurch gekennzeichnet, dass** die Verbinder (4), mit denen die Kettenglieder (2, 3) der Transportkette (1) verbunden sind, aus Keramik bestehen.

4. Erwärmungsanlage nach einem der Ansprüche 1 bis 3, **dadurch gekennzeichnet, dass** die Kettenglieder (2, 3) an die zu transportierenden Werkstücke (8) angepasst ist.

5. Erwärmungsanlage nach einem der Ansprüche 1 bis 4, **dadurch gekennzeichnet, dass** in Kettengliedern (2, 3) Vertiefungen zur Aufnahme von Werkstücken ausgebildet sind.

6. Erwärmungsanlage nach einem der Ansprüche 1 bis 5, **dadurch gekennzeichnet, dass** die Transportkette (1) in der Erwärmungsanlage über eine Walze und/ oder eine Trageschiene abgestützt sind.

7. Erwärmungsanlage nach Anspruch 6, **dadurch gekennzeichnet, dass** die Walze und/oder die Trageschiene aus Keramik hergestellt sind.

8. Erwärmungsanlage nach einem der Ansprüche 1 bis 7, **dadurch gekennzeichnet, dass** die Transportkette (1) über ein Kettenrad antreibbar ist.

9. Erwärmungsanlage nach Anspruch 8, **dadurch gekennzeichnet, dass** das **Kettenrad außerhalb einer Erwärmungszone der Erwärmungsanlage angeordnet ist.**

10. Erwärmungsanlage nach einem der Ansprüche 1 bis 9, **dadurch gekennzeichnet, dass** das zu erwärmende Werkstück (8) im Wesentlichen aus einem leitfähigen Material besteht.
